# EUROPÄISCHE PATENTSCHRIFT

(11) **EP 0 928 902 B1**
(45) Veröffentlichungstag und Bekanntmachung des Hinweises auf die Patenterteilung: **16.05.2001**
(21) Anmeldenummer: 98121725.0
(22) Anmeldetag: 14.11.1998
(51) Int. Cl.: F16B 37/04, F16L 3/24

(54) **Vorrichtung zum Befestigen von Haltekörpern, wie Schellenkörpern**
Apparatus for mounting fixing devices, such as pipe clamps
Dispositif pour monter des dispositives de fixation, telles que colliers de serrage

(30) Priorität: 08.01.1998 DE 19800426
(43) Veröffentlichungstag der Anmeldung: 14.07.1999
(73) Patentinhaber: HYDAC Befestigungstechnik GmbH, 66125 Saarbrücken-Dudweiler (DE)
(72) Erfinder: Quinot, Martin, 66386 St. Ingbert (DE); Kasubke, Volker, 66540 Neunkirchen (DE)
(74) Vertreter: Patentanwälte Bartels und Partner

(56) Entgegenhaltungen:
- EP-A- 0 713 018
- DE-A- 4 408 419
- DE-U- 9 112 540
- DE-U- 9 112 893

## Beschreibung

Die Erfindung betrifft eine Vorrichtung zum Befestigen von Haltekörpern, wie Schellenkörpern, an einer Tragschiene mit C-profilartigem Querschnitt mit den Merkmalen des Oberbegriffes des Anspruches 1.

Durch das DE-U-9112540 ist eine gattungsgemäße Vorrichtung zum Befestigen von Haltekörpern, wie Schellenkörpern, bekannt, die neben einer C-förmigen Tragschiene eine Tragschienenmutter, ein Klemmteil sowie ein Befestigungsteil als Schraubbolzen aufweist Bei der bekannten Lösung erfolgt die Verdrehung der Tragschienenmutter von Hand über das Klemmteil, das das freie Ende der Tragschienenmutter übergreift und zwischen den beiden einander zugewandten Profilenden der Tragschiene geführt ist. Bei der bekannten Lösung muß also die Tragschienenmutter über das Klemmteil noch von Hand in die Montagestellung verschwenkt werden. Des weiteren ist nicht auszuschließen, daß in der angesprochenen Montagestellung, bei der die Tragschienenmutter die beiden freien Profilenden untergreift, und mit dem Festlegen des Befestigungsteils es zu einer ungewollten Verschiebung der Tragschienenmutter mit Klemmteil entlang der Tragschiene kommt.

Durch die EP-A-713018 ist es bekannt, eine Tragschienenmutter, die als verlängertes Kopfteil einen Schraubenbolzen aufweist, über eine Überwurfmutter als Befestigungsteil über eine Hemmung zwischen dieser und der Tragschienenmutter, die aus einer Klebstoffverbindung besteht oder aus zusammengedrückten Gewindegängen am Schraubenbolzen der Tragschienenmutter, von einer Vormontagestellung in eine quer dazu verlaufende Endmontagestellung zu verschwenken; allein auch hier besteht insbesondere aufgrund des Fehlens eines eigenständigen Klemmteils an der Tragschienenmutter die Möglichkeit, daß vor dem Festlegen der Befestigungsanordnung ohne Haltekörper diese entlang der Tragschiene ungewollt verrutscht und nicht gewünschte Festlegestellungen an der Profilschiene einnimmt.

Durch das DE-U-9112893 ist eine Befestigungsvorrichtung bekannt mit einem an einer Tragschiene mit C-profilartigem Querschnitt festlegbaren zweigeteilten Schellenkörper, der als Haltekörper über zwei Befestigungsschrauben durchgriffen ist, die mit ihrem jeweils freien Ende für den Festlegevorgang in eine Tragschienenmutter eingreifen, die in Längsrichtung der Tragschiene eingeführt in eine Endmontagestellung quer zu dieser Einführrichtung verdreht wird. Ein Schnell montagevorgang mit dieser bekannten Vorrichtung ist nicht möglich. Vielmehr muß erst die gesamte Anordnung von Hand genau entlang der Tragschiene vorpositioniert und in dieser Stellung auch gehalten werden, um ein ungewolltes Verschieben der Anordnung längs der Profilschiene zu vermeiden. Aufgrund der umständlichen Handhabung kann man nicht von einem Schnellbefestigungssystem für Schellenkörper sprechen, das es erlauben würde, mit geringem Montageaufwand eine Vielzahl von Schellenkörpern in kürzester Zeit an Tragschienen festzulegen.

Ausgehend von diesem Stand der Technik liegt der Erfindung die Aufgabe zugrunde, die bekannten Befestigungsvorrichtungen dahingehend weiter zu verbessern, daß sie sich einfach und sehr schnell und mithin kostengünstig montieren lassen. Eine dahingehende Aufgabe löst eine Befestigungsvorrichtung mit den Merkmalen des Anspruches 1.

Dadurch, daß gemäß dem kennzeichnenden Teil des Anspruches 1 über eine Hemmung zwischen der Tragschienenmutter und dem zugeordneten Befestigungsteil diese aus einer Vormontagestellung in Längsrichtung des Längskanals in eine quer dazu verlaufende Montagestellung bringbar und in dieser unter Befestigen des Haltekörpers auf der Tragschiene verriegelbar ist und daß das Klemmteil mit zwei Verformungszonen das jeweils freie Profilende der Tragschiene umgreift, die über einen deformierbaren Stauchbereich miteinander verbunden sind, ist die Tragschienenmutter Bestandteil des gegebenenfalls mehrteiligen Haltekörpers und läßt sich einfach in die C-artige Tragschiene einsetzen und aufgrund der angesprochenen Hemmung in ihre eigentliche Montagestellung verschwenken, wobei dann nach Überwinden der Hemmung durch weitere Betätigung des Betätigungsteils ein fester Verbund von Haltekörper, Tragschiene und Tragschienenmutter hergestellt ist In dieser definierten Montageposition ist dann der Stauchbereich des Klemmteils in kraftschlüssiger Anlage mit den einander zugewandten Stirnseiten der beiden Profilenden und derart mit der Tragschienenmutter unverlierbar an der vorgegebenen Position längs der Tragschiene gesichert, wobei die dahingehende Positionssicherung in der Vormontagestellung über die beiden Verformungszonen des Klemmteils sichergestellt ist. Derart läßt sich die erfindungsgemäße Vorrichtung also einfach und schnell von Hand und mithin kostengünstig an Tragschienen einer vorgebbaren Variationsbreite an Größen definiert festlegen.

Weitere vorteilhafte Ausgestaltungen sind Gegenstand der Unteransprüche.

Im folgenden wird die erfindungsgemäße Vorrichtung anhand einer Ausführungsform nach der Zeichnung näher erläutert.

Es zeigen in prinzipieller und nicht maßstäblicher Darstellung die
- Fig.1 und 2: in Stirnansicht bzw. in Draufsicht die Vormontagestellung der Vorrichtung;
- Fig.3 und 4: in Stirnansicht bzw. in Draufsicht die Montagestellung der Vorrichtung;
- Fig.5 und 6: im Längsschnitt bzw. in Draufsicht die Tragschienenmutter;
- Fig. 7,8 und 9: in Unteransicht, im Längsschnitt sowie in Draufsicht das Klemmteil der Vorrichtung.

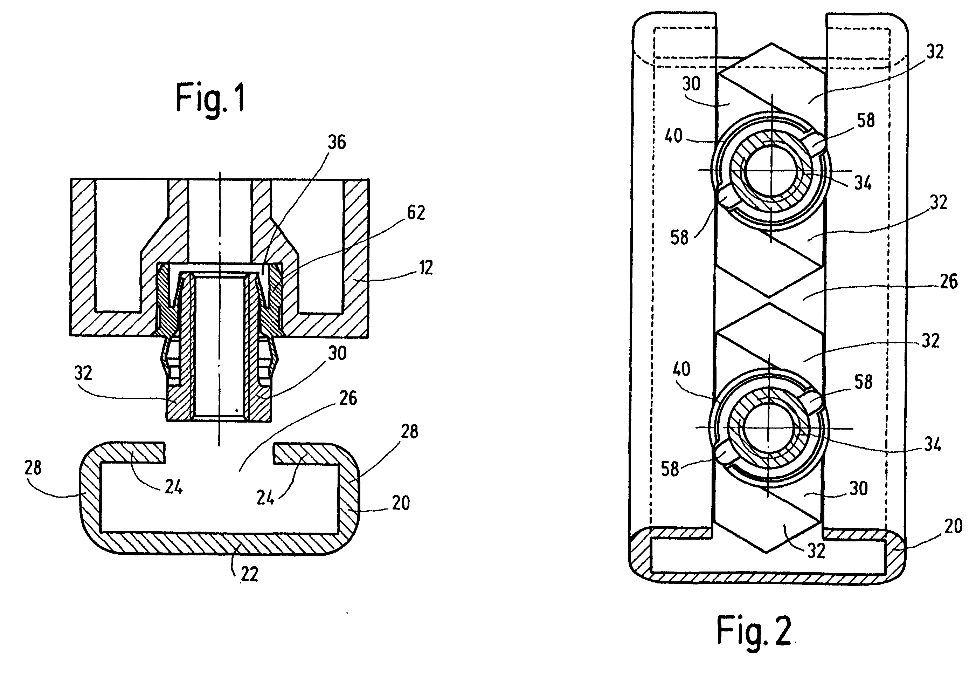

Die im folgenden vorgestellte erfindungsgemäße Vorrichtung dient dem Befestigen von Haltekörpern, insbesondere in Form von Schellenkörpern 10. Dahingehende Schellenkörper 10 bestehen aus einer unteren Schellenhälfte 12 und einer oberen Schellenhälfte 14. Zwischen den beiden Schellenhälften 12,14 wird ein kreisrunder Aufnahmeraum 16 begrenzt, der in üblicher und daher nicht näher dargestellter Art und Weise ein Rohr 18 od.dgl. aufnimmt und in seiner Position festlegt. Insbesondere sollen dahingehende Rohre 18 über die Schellenkörper 10 an Tragschienen 20 festgelegt werden, die, wie insbesondere die Fig.1 bis 4 zeigen, ein C-profilartiges Querschnittsprofil haben. Die Tragschiene 20 weist einen Schienenboden 22 auf und hat zwei einander zugewandte Profilenden 24, die eine Art Haltevorsprung bilden und die zwischen sich einen Längskanal 26 begrenzen. Die beiden Profilenden 24 verlaufen parallel zu der Ebene des Schienenbodens 22 und sind über Längswände 28 einstückig mit dem Schienenboden 22 der Tragschiene 20 verbunden.

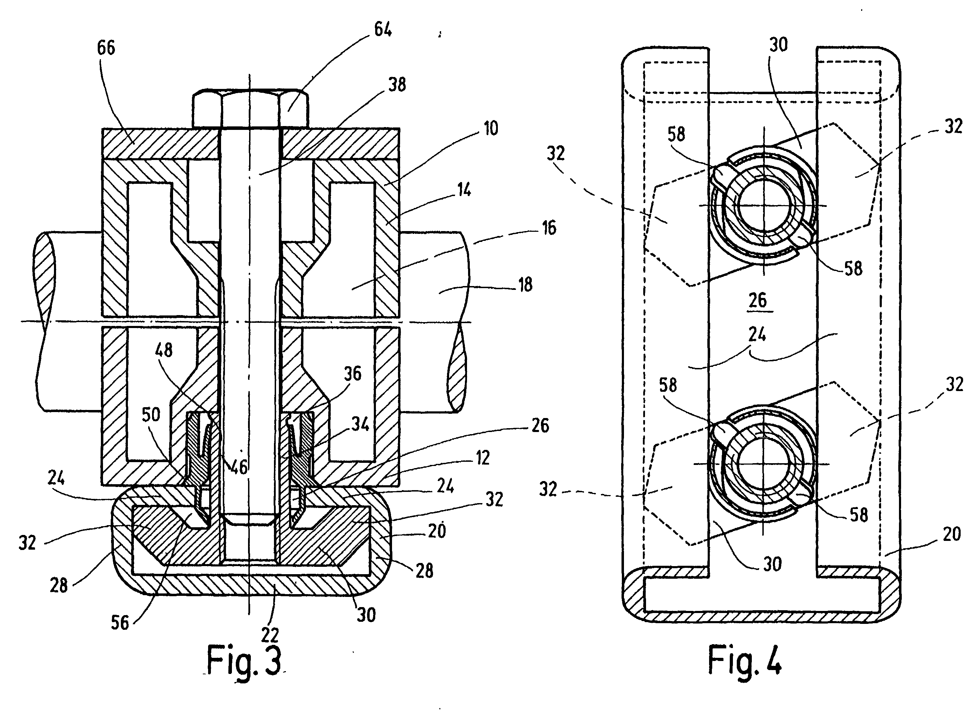

Die angesprochenen beiden Profilenden 24 sind von einer sog. Tragschienenmutter 30 mit ihren einander diametral gegenüberliegenden Flanken 32 untergreifbar, wobei das Kopfteil 34 der Tragschienenmutter 30 in eine Ausnehmung 36 des Haltekörpers in Form der unteren Schellenhälfte 12 eingreift (vgl. Fig.1). Die dahingehende jeweilige Ausnehmung 36 ist zylindrisch ausgebildet und auf der Unterseite der unteren Schellenhälfte 12 in der Art einer Bohrung angeordnet. Der Schellenkörper 10 wird zum Ausüben einer Klemmkraftwirkung auf die beiden Schellenhälften 12,14 von mindestens einem Befestigungsteil 38 in Form eines Schraubenbolzens durchgriffen, wobei das jeweilige Befestigungsteil 38 wiederum in das zugeordnete Kopfteil 34 der Tragschienenmutter 30 (vgl.Fig.3) eingreift.

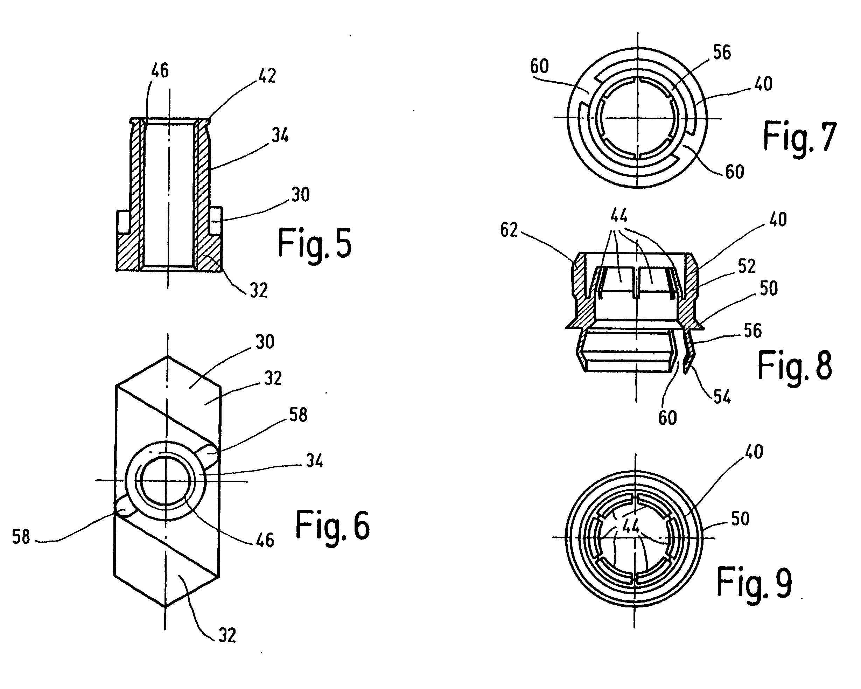

Die Tragschienenmutter 30 ist über ein zylindrisches Klemmteil 40 unverlierbar im Haltekörper in Form der unteren Schellenhälfte 12 gesichert, wobei über eine Hemmung zwischen der Tragschienenmutter 30 und dem zugeordneten Befestigungsteil 38 diese aus einer Vormontagestellung in Längsrichtung des Längskanals 26 der Tragschiene 20, wie sie in der Fig.2 dargestellt ist, in eine quer dazu verlaufende Montagestellung, wie sie Gegenstand der Fig.4 ist, bringbar und in dieser unter Befestigen des Haltekörpers in Form des Schellenkörpers 10 auf der Tragschiene 20 verriegelbar ist. Das vorzugsweise aus einem Kunststoffmaterial bestehende Klemmteil 40 ist in den Fig.7 bis 9 näher dargestellt. Es bildet ein hülsenförmiges Schnapp- oder Klippteil aus und ist mit dem zylindrisch vorstehenden Kopfteil 34 der Tragschienenmutter 30 verbindbar. Hierfür weist das Kopfteil 34 an seinem freien Ende (vgl. Fig.5) eine abgesetzte Randnaht 42 auf, unter die einzelne Rastnasen 44 des Klemmteils 40 an dem Kopfteil 34 rastend anliegen.

Wie des weiteren die Fig.5 zeigt, weist das Kopfteil 34 der Tragschienenmutter 30 ein durchgehendes Innengewinde 46 auf, das beispielsweise leicht konisch verlaufend eine Art Hemmung bildet beim Eindrehen des Außengewindes 48 des Befestigungsteils 38. Wie insbesondere die Fig.8 zeigt, weist das jeweilige Klemmteil 40 einen Randflansch 50 auf, zwischen dem und den Flanken 32 der Tragschienenmutter 30 in ihrer Montagestellung (vgl. Fig.3) die Profilenden 24 der Tragschiene 20 verlaufen. In dieser Montagestellung liegt der Randflansch 50 des Klemmteils 40 auf der Unterseite der unteren Schellenhälfte 12 in einer zugeordneten Ringausnehmung bündig an, die wiederum ansonsten in Anlage mit der Oberseite der Tragschiene 20 ist. Das Klemmteil 40 umgreift mit zwei Verformungszonen 52,54 das jeweils freie Profilende 24 der Tragschiene 20, die über einen deformierbaren Stauchbereich 56 miteinander in Verbindung stehen. Die jeweilige Tragschienenmutter 30 weist zwei einander diametral gegenüberliegende Verrastungsstege 58 auf, die in Richtung des zylindrischen Kopfteils 34 vorstehen und die in ihrer Montagestellung (Fig.4) sich außenumfangsseitig gegen die Stirnseiten der Profilenden 24 abstützen und somit eine Art Rückdrehsicherung ausbilden. Die Verrastungsstege 58 greifen dabei in zugeordnete Ausnehmungen 60 (vgl. Fig.8) des Klemmteils 40 ein, die eine Mitnahmehilfe beim Verdrehen der Tragschienenmutter 30 aus ihrer Vormontage- in die Montagestellung für das Klemmteil 40 bilden.

Der übersichtlicheren Darstellung wegen wird im folgenden anhand der Zeichnung nun der Zusammenbau der Befestigungsvorrichtung näher erläutert.

Zunächst wird das Klemmteil 40 gemäß den Fig. 7 bis 9 auf das Kopfteil 34 der Tragschienenmutter 30 verclippst, wobei die radial angeordneten Rastnasen 44 die Randnaht 42 des Kopfteils 34 untergreifen. Die dahingehend ausgebildete Tragschienenmutter 30 wird dann, wie dies die Fig.1 zeigt, von unten her in die zugeordnete zylindrische Ausnehmung 36 der unteren Schellenhälfte 12 passend und formschlüssig eingesetzt. Eine zylindrisch vorstehende Ringzone 62 stützt sich dann derart am Innenumfang der zylindrischen Ausnehmung 36 ab, daß die Tragschienenmutter 30 unverlierbar innerhalb der unteren Schellenhälfte 12 gehalten ist. Die Tragschienenmutter 30 wird dabei derart eingesetzt, daß ihre beiden diametral einander gegenüberliegenden Flanken 32 in Längsrichtung des Längskanals 26 der Tragschiene 20 ausgerichtet sind, wobei der freigelassene Abstand zwischen den beiden Profilenden 24 der Tragschiene 20 größer bemessen ist als die zugehörige Breite der Tragschienenmutter 30. Bei größeren Schellenkörpern 10 können unter Freilassen des jeweiligen Aufnahmeraums 16 mehrere, insbesondere zwei Tragschienenmuttern 30 hintereinander angeordnet sein, wie dies die Fig.2 erkennen läßt. Die Höhe der Flanken 32 der jeweiligen Tragschienenmutter 30 ist derart gewählt, daß sie in den lichten Abstand zwischen den beiden Profilenden 24 und dem Schienenboden 22 der Tragschiene 20 eingreifen können. Das freie Ende der jeweiligen Flanke 32 einer Tragschienenmutter 30 kann mit Schrägen versehen sein, um das Verschwenken der Tragschienenmutter 30 und das Untergreifen der Profilenden 24 innerhalb der Tragschiene 20 zu erleichtern. Bei der in der Fig.2 dargestellten Vormontagestellung liegt die untere Schellenhälfte 12 locker auf der Oberseite der Tragschiene 20 mit ihren beiden Profilenden 24 auf.

In einem weiteren Montageschritt wird nunmehr das Rohr 18 in den Aufnahmeraum 16 des Schellenkörpers 10 eingelegt und der Schellenkörper 10 durch Auflegen der oberen Schellenhälfte 14 (vgl. Fig.3) geschlossen. Nun werden die beiden Befestigungsteile 38 in Form der beiden Schraubenbolzen von oben her und den Aufnahmeraum 16 randseitig umgreifend in den Schellenkörper 10 eingeführt, wobei der Schraubenkopf 64 eines jeden Befestigungsteils 38 für eine spätere Auflage mit einer Halteplatte 66 des Schellenkörpers 10 vorgesehen ist. Durch Eindrehen des Schraubenbolzens in den Schellenkörper 10 kommt sein Außengewinde 48 in Eingriff mit dem Innengewinde 46 des Kopfteils 34 der Tragschienenmutter 30, wobei der Schraubenbolzen derart lange eingedreht wird, bis er auf eine Hemmung stößt, die durch ihn selbst gebildet sein kann und/oder durch die Gewindeverläufe und/oder durch die Ausgestaltung des Kopfteils 34. Die dahingehende Hemmung führt dazu, daß beim Weiterdrehen des Schraubenbolzens die jeweilige Tragschienenmutter 30 mit verschwenkt wird, und zwar so lange, bis die Flanken 32 unter Anstoßen an die Längswände 28 die beiden Profilenden 24, wie in den Fig. 3 und 4 gezeigt, untergriffen haben.

Bei der dahingehenden Montagestellung ist der Schraubenkopf 64 dann noch nicht fest in Anlage mit der Halteplatte 66, sondern kann einen Überstand gegenüber derselben (nicht dargestellt) aufweisen. Beim anschließenden Weiteranziehen des Befestigungsteils 38 in Form des Schraubenbolzens wird die angesprochene Hemmung überwunden und die beiden Schellenhälften 12,14 werden gegeneinander derart bewegt, daß das Rohr 18 im Aufnahmeraum 16 klemmend festgelegt ist. Des weiteren wird über das Anzugsmoment erreicht, daß die Flanken 32 der beiden Tragschienenmuttern 30 sich in Richtung Unterseite der beiden Profilenden 24 bewegen und dort fixiert sind. In diesem Endmontagezustand liegt dann der Schellenkörper 10 fest auf der Oberseite der Tragschiene 20 auf.

In dieser definierten Montageposition ist der Stauchbereich 56 des Klemmteils 40 in kraftschlüssiger Anlage mit den einander zugewandten Stirnseiten der beiden Profilenden 24. Ferner findet eine Abstützung des Klemmteils 40 am Übergang des Kopfteils 34 mit den beiden Flanken 32 einer Tragschienenmutter 30 statt und an der Unterseite der zylindrischen Ausnehmung 36 der unteren Schellenhälfte 12. Der Randflansch 50 des Klemmteils 40 nimmt dann zwischen sich und den Oberseiten der beiden Flanken 32 die beiden Profilenden 24 auf. In der dahingehenden Montageposition sind dann die diametral einander gegenüberliegenden Verrastungsstege 58 in Anlage mit den beiden einander zugewandten Stirnseiten der Profilenden 24, was eine Rückdrehsicherung in Richtung der Vormontageposition einer jeden Tragschienenmutter 30 ergibt.

Mit der erfindungsgemäßen Befestigungsvorrichtung ist eine einfache und schnelle Montage von Schellenkörpern oder sonstigen Haltekörpern auf Tragschienen möglich. Bei einer anderen nicht dargestellten Ausführungsform läßt sich dieses Ergebnis auch dadurch erreichen, daß das Klemmteil einstückig mit dem Kopfteil 34 der Tragschienenmutter 30 und mithin auch mit dieser einstückig ausgebildet ist, beispielsweise in Form eines Kunststoffspritzteils oder in Form einer kunststoffumspritzten Tragschienenmutter aus Metallwerkstoff.

## Patentansprüche

1. Vorrichtung zum Befestigen von Haltekörpem, wie Schellenkörpern (10), an einer Tragschiene (20) mit C-profilartigem Querschnitt, deren einander zugewandten beiden Profilenden (24) einen Längskanal (26) der Tragschiene (20) begrenzen und von einer Tragschienenmutter (30) mit ihren einander diametral gegenüberliegenden Flanken (32) untergreifbar sind, wobei das Kopfteil (34) der Tragschienenmutter (30) in eine Ausnehmung (36) des Haltekörpers eingreift, der von einem Befestigungsteil (38) durchgriffen ist, welcher wiederum in das Kopfteil (34) eingreift, wobei die Tragschienenmutter (30) über ein Klemmteil (40) unverlierbar im Haltekörper gesichert ist, dadurch gekennzeichnet, daß über eine Hemmung zwischen der Tragschienenmutter (30) und dem zugeordneten Befestigungsteil (38) diese aus einer Vormontagestellung in Längsrichtung des Längskanals (26) in eine quer dazu verlaufende Montagestellung bringbar und in dieser unter Befestigen des Haltekörpers auf der Tragschiene (20) verriegelbar ist und daß das Klemmteil (40) mit zwei Verformungszonen (52,54) das jeweils freie Profilende (24) der Tragschiene (20) umgreift, die über einen deformierbaren Stauchbereich (56) miteinander verbunden sind.

2. Vorrichtung nach Anspruch 1, dadurch gekennzeichnet, daß das Klemmteil (40) einstückig Teil der Tragschienenmutter (30) ist.

3. Vorrichtung nach Anspruch 1, dadurch gekennzeichnet, daß das Klemmteil (40) als hülsenförmiges Schnapp- oder Klippteil mit dem zylindrisch vorstehenden Kopfteil (34) der Tragschienenmutter (30) verbindbar ist.

4. Vorrichtung nach einem der Ansprüche 1 bis 3, dadurch gekennzeichnet, daß das Kopfteil (34) ein Innengewinde (46) aufweist, das mit der Hemmung versehen ist, in welches das Außengewinde (48) des Befestigungsteils (38) eingreift, das einen Schraubenbolzen bildet und eine Verdrehsicherung des Befestigungsteils (38) darstellt.

5. Vorrichtung nach einem der Ansprüche 1 bis 4, dadurch gekennzeichnet, daß das jeweilige Klemmteil (40) einen Randflansch (50) aufweist, zwischen dem und den Flanken (32) der Tragschienenmutter (30) in ihrer Montagestellung die Profilenden (24) der Tragschiene (20) verlaufen.

6. Vorrichtung nach einem der Ansprüche 1 bis 5, dadurch gekennzeichnet, daß die Tragschienenmutter (30) Verrastungsstege (58) aufweist, die in ihrer Montagestellung sich gegen die Profilenden (24) abstützen und eine Verdrehsicherung der Tragschienenmutter (30) bewirken.

7. Vorrichtung nach einem der Ansprüche 1 bis 6, dadurch gekennzeichnet, daß der Haltekörper ein Schellenkörper (10) mit zwei Schellenhälften (12,14) ist, die zwischen sich einen Aufnahmeraum (16) begrenzen, der randseitig jeweils von einem Befestigungsteil (38) begrenzt ist, das in die zugehörige Tragschienenmutter (30) eingreift.

8. Vorrichtung nach Anspruch 7, dadurch gekennzeichnet, daß der Randflansch (50) des Klemmteils (40) auf der Unterseite der Schellenhälfte (12) anliegt, die in Anlage mit der Oberseite der Tragschiene (20) ist.

9. Vorrichtung nach einem der Ansprüche 6 bis 8, dadurch gekennzeichnet, daß die Verrastungsstege (58) in Ausnehmungen (60) des Klemmteils (40) eingreifen, die eine Mitnahmehilfe beim Verdrehen der Tragschienenmutter (30) aus ihrer Vormontage- in die Montagestellung bilden.

## Claims

1. A device for attaching holding bodies such as bracket bodies (10) on a supporting rail (20) with a C-like section, the two ends of which face each other and delineate a longitudinal channel (26) of the supporting rail (20) and being engageable from below by a rail nut (30) with its diametrically opposite flanks (32), the head (34) of the nut (30) engaging in a recess of the holding body through which a fastening part (38) engages, the latter in turn engaging into the head (34), the rail nut (30) being captively secured in the holding body by means of a clamping part (40), characterised by the fact that the said nut can be brought from a preliminary assembly position through a restraint between the nut (30) and the associated fastening part (38) in the longitudinal direction of the longitudinal channel (26) to an assembly position extending across it and can be locked in this position by fixing the holding body on the supporting rail (20), and that the clamping part (40) spans, by its two deforming zones (52, 54) each of the open ends of the section (24) of the rail, the said deforming zones being interconnected by a deformable compressing area (56).

2. A device according to Claim 1, characterised by the fact that the clamping part (40) is integral with the rail nut (3).

3. A device according to Claim 1, characterised by the fact that the clamping part (40), being a sleeve-shaped snap-in or clip-on part, is connectable to the cylindrical protruding head part (34) of the rail nut (30).

4. A device according to one of the Claims 1 to 3, characterised by the fact that the head part (34) has an inside thread (46) provided with the restraint into which the outside thread (48) of the fastening part (38) engages, the outside thread forming a bolt and securing the fastening part (38) against rotation.

5. A device according to one of the Claims 1 to 4, characterised by the fact that the respective clamping part (4) has an edge flange (50) between which and the flanks (32) of the rail nut (30) the section ends (24) of the supporting rail (20) extend in the assembly position.

6. A device according to one of the Claims I to 5, characterised by the fact that the rail nut (30) has locking cams (58) which, in their assembled position, rest against the ends of the section (24) and secure the rail nut (30) against rotation.

7. A device according to one of the Claims 1 to 6, characterised by the fact that the holding body is a bracket body (10) with two bracket halves (12, 14) delineating between them the locating area (16) which is delineated in each case at the edge by the fastening part (38) engaging in the respective rail nut (30).

8. A device according to Claim 7, characterised by the fact that the edge flange (50) of the clamping part (40) rests against the bottom side of the bracket half (12) which is in contact with the top side of the supporting rail (20).

9. A device according to one of the Claims 6 to 8, characterised by the fact that the locking cams (58) engage in the recesses (60) in the clamping part (40) which support the drive motion when the rail nut (30) is being rotated from its preliminary assembly position to the final assembly position.

## Revendications

1. Dispositif pour monter des dispositifs de fixation, tels que des colliers de serrage (10), sur un rail de support (20) présentant une section transversale de type profilé en C, dont les deux extrémités profilées (24) tournées l'une vers l'autre délimitent un canal longitudinal (26) du rail de support (20) et qui peuvent être saisies par dessous par un écrou de rail de support (30) avec ses flancs (32) situés diamétralement l'un en face de l'autre, moyennant quoi la partie formant tête (34) de l'écrou de rail de support (30) s'insère dans un évidement (36) du dispositif de fixation qui est traversé par une partie de fixation (38), laquelle partie s'insère de nouveau dans la partie formant tête (34), moyennant quoi l'écrou de rail de support (30) est fixé sur une partie de serrage (40) et de manière imperdable dans le dispositif de fixation, caractérisé en ce que par un blocage entre l'écrou de rail de support (30) et la partie de fixation (38) associée, ce dispositif peut être amené; à partir d'une position de pré-montage le long du canal longitudinal (26) dans une position de montage s'étendant transversalement par rapport à celui-ci et y être réglé grâce à la fixation du dispositif de fixation sur le rail de support (20) et en ce que la partie de serrage (40) munie de deux zones de mise en forme (52, 54) entoure l'extrémité profilée libre (24) respective du rail de support (20), ces zones de mise en forme étant raccordées l'une à l'autre au moyen d'une région d'écrasement (56) déformable.

2. Dispositif selon la revendication 1, caractérisé en ce que la partie de serrage (40) est une partie monobloc de l'écrou de rail de support (30).

3. Dispositif selon la revendication 1, caractérisé en ce que la partie de serrage (40) se présentant comme partie à encliqueter ou à enclencher en forme de douille peut être raccordée à la partie formant tête (34) cylindrique saillante de l'écrou de rail de support (30).

4. Dispositif selon l'une des revendications 1 à 3,
caractérisé en ce que la partie formant tête (34) présente un filet intérieur (46), qui est muni du dispositif de blocage, dans lequel s'insère le filet extérieur (48) de la partie de fixation (38), le filet formant un boulon fileté et représentant une sécurité contre toute rotation de la partie de fixation (38).

5. Dispositif selon l'une des revendications 1 à 4, caractérisé en ce que chaque partie de serrage (40) présente une bride marginale (50), les extrémités profilées (24) du rail de support (20) s'étendant entre cette bride et les flancs (32) de l'écrou de rail de support (30) dans leur position de montage.

6. Dispositif selon l'une des revendications 1 à 5, caractérisé en ce que l'écrou de rail de support (30) présente des barrettes d'encliquetage (58) qui, dans leur position de montage, butent contre les extrémités profilées (24) et agissent comme une sécurité contre toute rotation de l'écrou de rail de support (30).

7. Dispositif selon l'une des revendications 1 à 6, caractérisé en ce que les dispositifs de fixation sont un collier de serrage (10) muni de deux moitiés de serrage (12, 14), qui délimitent entre elles un espace de réception (16), lequel est respectivement limité sur les bords par une partie de fixation (38) qui s'insère dans l'écrou de rail de support (30) lui appartenant.

8. Dispositif selon la revendication 7, caractérisé en ce que la bride marginale (50) de la partie de serrage (40) se situe sur le côté inférieur de la moitié de serrage (12) qui est disposé au niveau du côté supérieur du rail de support (20).

9. Dispositif selon l'une des revendications 6 à 8, caractérisé en ce que les barrettes d'encliquetage (58) s'insèrent dans les évidements (60) de la partie de serrage (40), qui forment une aide à l'entraînement lors de la rotation de l'écrou de rail de support (30) lorsqu'ils passent de leur position de pré-montage à la position de montage.
